Europäisches Patentamt

**European Patent Office**

**Office européen des brevets**

(19)

(11) Publication number: **0 089 071**

**A1**

(12) **EUROPEAN PATENT APPLICATION**

(21) Application number: **83200203.4**

(22) Date of filing: **08.02.83**

(51) Int. Cl.³: **C 09 D 5/16**

(30) Priority: **11.03.82 GB 8207142**

(43) Date of publication of application:
**21.09.83 Bulletin 83/38**

(84) Designated Contracting States:
**BE DE FR GB IT NL SE**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Shone, Edward Brian**
**Bellaviste, Cresford Road**
**Hope, Clwyd(GB)**

(74) Representative: **Puister, Antonius Tonnis, Mr. et al,**
**P.O. Box 302**
**NL-2501 CH The Hague(NL)**

(54) **Coated fresh water structure.**

(57) A fresh water structure, the surface of which is at least partially coated with one or more layers, the outermost layer comprising a vulcanized silicone rubber and fluid compound, e.g. a silicone fluid, or a hydrocarbon mixture.

Croydon Printing Company Ltd.

## COATED FRESH WATER STRUCTURE

The invention relates to a fresh water structure, the surface of which is at least partially coated with one or more layers, and to a method for the manufacture of such a coated fresh water structure.

Under surface of a fresh water structure is to be understood in this specification and claims the surface or surfaces of the said structure which is (are) in contact with the fresh water.

Under fresh water is to be understood in this specification and claims any type of water, aqueous solution, aqueous emulsion or aqueous suspension which is not sea water or based thereon. As examples may be mentioned water in lakes, rivers, canals, locks, aquaducts, culverts, water works, fish tanks, fish ponds, garden ponds, swimming pools, sewers, pipings, emulsion tanks, cooling towers.

As fresh water structures are to be considered in this specification and claims all artificial installations which may come into or are virtually continuously in contact with fresh water. As examples may be mentioned bank revetments, piles, dams, water works, fish tanks, fish ponds, fish nets, garden ponds, swimming pools, ships, pipelines, pipings, sewers, aquaducts, culverts, cooling towers, underwatermarkers.

Surfaces of structures which are exposed to fresh water are liable to fouling which may be due to deposition of sticky materials present in the fresh water and/or to growth of organisms e.g. weeds, grasses, algae, barnacles. Because the deposits and organisms stick to the surface cleaning thereof is often difficult and can only be achieved by severe measures, such as brushing and the like. Moreover fouling often occurs at sites which are only accessible with difficulty.

There has now been found a coating which precludes fouling to a great extent, and from which deposits and organisms can be easily removed e.g. by water washing.

Accordingly, the invention relates to a fresh water structure, the surface of which is at least partially coated with one or more layers, the outermost layer comprising a vulcanized silicone rubber and a fluid compound.

It will be understood that the outermost layer is the layer which is in contact with the fresh water in case the structure is in use. Although not the whole surface need be coated with the layer according to the invention it is preferred that the surface of the fresh water structure is coated for the greater part, and in particular substantially completely, with an outermost layer which comprises a vulcanized silicone rubber and a fluid compound.

Vulcanized silicone rubbers can be prepared from organopolysiloxanes (also called silicone gums) consisting essentially of alternating atoms of silicon and oxygen as a polymeric backbone with organic groups attached to the silicon atoms of the polymeric backbone. Vulcanized silicone rubber may be prepared by heat curing with various catalysts (such as peroxides) or by radiation curing of a silicone gum.

Vulcanized silicone rubbers may also be prepared by vulcanizing at ambient temperature silicone gums which contain silanol end groups (the so-called RTV gums). The use of RTV gum is preferred for the preparation of vulcanized silicone rubbers according to the invention. To prepare a vulcanized silicone rubber from an RTV gum two methods exist.

In the so-called two-package system, the RTV gum is mixed with a cross-linking agent, usually ethyl silicate, and if desired, with fillers, pigments, etc. Just before use a suitable catalyst (in general an organic tin-salt, such as dibutyl tin dilaurate or stannous octoate) is blended in, and cross-linking starts immediately. It is also possible to add the cross-linking agent and/or the other desired materials partly or totally in admixture with the catalyst to the RTV gum to be vulcanized. Solvents may also be present in one or both of the two components (RTV gum and catalyst) to be mixed.

In the one-package system an RTV gum has been reacted with a compound of general formula $RSiX_3$, in which R stands for hydrocarbyl (in general methyl), and X for a hydroxyl group or a group which contains a hydrolyzable oxygen linkage (e.g., acetoxy) or for an amino group or a group which contains a hydrolyzable nitrogen linkage (e.g., acylamido or ketoxim), or for another reactive site. Solvents, catalysts and/or fillers, pigments, etc., may also be present in the one-package system, which must be kept protected from moisture. Cross-linking occurs when the package is contacted with water, e.g., contacted with a moist atmosphere.

All or the predominant part of the organic groups attached to the silicon atoms of the polymeric backbone of the silicone gums which are used in the preparation of the silicone rubbers according to the invention are very suitably hydrocarbyl groups (in particular methyl groups), the remainder may e.g. be ethyl-, phenyl- or substituted hydrocarbyl groups, such as chlorophenyl-, fluoropropyl- or cyanoethyl groups.

Preferably the said organic groups attached to the silicon atoms of the polymeric backbone of the silicone gums which are used in the preparation of the silicone rubbers according to the invention are silicon-free segments which are constituted of recurrent units.

The said silicon-free segments which are constituted of recurrent units (further to be indicated as segments) may consist of several types of recurrent units. Preferably, the unit weight of each recurring unit is at least 30, in particular at least 50. (Unit weight stands for the weight ratio of a unit and a hydrogen atom). The segments may, for example, consist of polymerization products of 1,2-epoxides, such as alkylene oxides, or consist of condensation products of 1,2-epoxides and dihydroxy compounds such as bisphenols, e.g., condensation products of epichlorohydrin and 2,2-(4-hydroxyphenyl)propane. Segments derived partly or totally from epoxides are very suitably attached to silicon atoms present in the silicone rubber by means of an oxyphenylene- or an aminophenylene group, in which groups the phenylene group is bound to a silicon atom and the oxygen, respective nitrogen, atom to the epoxide-derived segment.

Other examples of segments are those derived from urethane based units; they may very suitably have been obtained by polyaddition of di-isocyanates, such as toluene-di-isocyanate and/or hexanemethylene-di-isocyanate and dihydroxy compounds, such as dihydroxy polyesters or dihydroxy polyethers. Polyurethane segments are very suitably attached to silicon atoms of the silicone rubber by means of an oxyphenylene group or an aminophenylene group, in which groups the phenylene group is bound to a silicon atom and the oxygen, respective nitrogen, atom to the polyurethane segment.

It is preferred that the segments are polymeric segments and consist of recurrent units derived from polymerization of compounds containing ethylenic unsaturation. Very suitably segments of this type are linked to silicon atoms in the silicone rubber via alkylene or alkylidene groups, in particular methylene groups.

The segments are very suitably obtained by grafting onto the vulcanized silicone rubber, or they may be present in the organo-polysiloxane from which the silicone rubber has been prepared by vulcanization. It is also possible to carry out the vulcanization of the organic polysiloxane and the grafting simultaneously.

It is preferred that the outermost layer has been prepared by vulcanizing an organopolysiloxane which contains segments which segments are constituted of recurrent units which units are derived from monomers containing ethylenic unsaturation.

Segments which are linked via alkylene or alkylidene groups to a silicon atom of the organic polysiloxane are very suitably obtained by grafting organopolysiloxane backbones which contain alkyl groups attached to a silicon atom with graft components which contain ethylenic unsaturation. The said alkyl groups very suitably contain at most four carbon atoms, methyl groups being preferred. The organopolysiloxane backbones onto which the segments are to be grafted may, of course, besides alkyl groups contain other groups, such as phenyl groups, substituted phenyl groups, vinyl groups, halogen (e.g., chlorine and/or fluorine) containing groups (e.g., haloalkyl groups), etc. Very suitably the organopolysiloxane backbone consists of polydimethylsiloxane.

Because the organopolysiloxanes which contain segments are to be vulcanized, they need to possess certain groups which make them suitable for vulcanization. It is attractive that the said groups are already present in the organopolysiloxanes onto which the segments are to be grafted.

The grafting of compounds with ethylenic unsaturation onto the organopolysiloxane backbones may be achieved by any eligible means. Very suitably the grafting is accomplished by polymerization, with the aid of a free radical initiator, of compounds with ethylenic unsaturation which are suited for such type of polymerization (also to be called monomers). Very suitably the monomers are selected from unsaturated aliphatic hydrocarbons, unsaturated halogenated hydrocarbons, vinyl aromatic compounds, unsaturated acids or esters, unsaturated amides, unsaturated nitriles or any mixture of two or more thereof. Examples are the low molecular weight hydrocarbons, such as ethylene, propylene, butylene, isobutylene; vinyl halides, such as vinyl chloride and vinyl fluoride; vinyl esters of organic acids, such as vinyl acetate; styrene, ring-substituted styrenes and other vinyl aromatics, such as vinylpyridine and vinylnaphthalene; acrylic acid and methacrylic acid and derivatives thereof including the salts, esters, amides, methacrylonitrile and acrylonitrile, acrolein and methacrolein; N-vinyl compounds, such as N-vinylcarbazole, N-vinylpyrrolidone and N-vinylcaprolactam.

Di-substituted ethylene derivatives which are also very suitable are vinylidene chloride, vinylidene fluoride, vinylidene cyanide, maleic anhydride, esters of fumaric and maleic acids, stilbene. The monomers may be used singly, or in combination of two or more.

Preferably, at least part of the monomers containing ethylenic unsaturation consists of unsaturated acids or derivatives, in particular esters, thereof. Very conveniently at least part of the monomers consists of esters of acrylic acid and/or methacrylic acids and monovalent alcohols. Examples of these esters are methyl methacrylate, ethyl methacrylate, propyl methacrylate, butyl methacrylate, methyl acrylate, ethyl acrylate, propyl acrylate, and in particular butyl acrylate.

It is often of advantage that at least part of the monomers consists of styrene.

It is preferred that the polymeric segments are derived from both butyl acrylate and styrene.

Free radical initiators which are very suitable to be used for grafting the monomers onto the organopolysiloxane are hydroperoxides, such as t.-butyl hydroperoxide, cumene hydroperoxide; dialkylperoxides, such as di-t.-butyl peroxide; peresters, such as t.-butyl perbenzoate. Benzoyl peroxide and azo-isobutyronitrile may also be used as free radical initiators.

The length of the segments and the number thereof will depend on the grafting conditions, such as temperature, concentration of monomers, ratio of monomers to organopolysiloxane, amount of free radical initiator; these conditions can vary between wide limits.

Very suitably the weight percentage of the segments (calculated on the ultimate vulcanized silicone rubber) is from 20 to 80, in particular from 30 to 60.

The vulcanization of the organopolysiloxanes which contain segments is very suitably carried out after the said organopolysiloxanes have been applied onto the surface of the fresh water structure.

A fluid organic compound according to the invention is a gaseous or liquid compound. The fluid compound is admixed with the vulcanized silicone rubber in the outermost layer according to the invention, and may exude therefrom when exposed to a fresh water environment.

It is preferred that the fluid compound is non-toxic, which means that it has neither toxicity for organisms which may be present in fresh water (e.g. fishes) nor for organisms which may develop onto the surface of the fresh water structure, e.g. algae, grasses. Very suitably the fluid compound is a metal-free organic compound, which preferably on the one hand is liquid at the temperatures prevailing in the fresh water with which the structure is contacted, and on the other hand is not volatile at ambient temperature. Accordingly, the said fluid compound very suitably has a boiling point at atmospheric pressure of at least 250°C. Very suitably the fluid compound is applied onto the fresh water structure in admixture with the silicone gum to be vulcanized and accordingly it is of advantage that it is compatible therewith, so that a homogeneous mixture can be prepared of the silicone gum to be vulcanized and the amount of fluid compound to be incorporated. No significant short term phase separation is to occur before vulcanization, although slow release of the fluid compound from the vulcanized silicone rubber, in particular exudation, may occur, and is considered to be of advantage.

To aid the dispersion of the fluid compound in the silicone gum to be vulcanized it is of advantage that a dispersing agent is present in the mixture.

Very suitable fluid compounds to be present in the outermost layer of the fresh water structure are silicone fluids, which are defined as polydihydrocarbyl-siloxanes (of which the hydrocarbyl groups may be substituted with hetero atoms). The hydrocarbyl groups may be alkyl groups (in particular methyl groups) or all or part thereof may be aryl groups (in particular phenyl groups). Silicone fluids of which the hydrocarbyl groups consist partly of methyl groups and partly of phenyl groups are very suitable.

Other fluid compounds which are very suitable to be present in the outermost layer of the fresh water structure are hydrocarbons. As examples may be mentioned mineral oils and fractions thereof, in particular lubricating oils, such as technical white oils.

Other types of hydrocarbons very suitable to be used as fluid compounds are low molecular weight polydienes, such as polybutadiene and polyisoprene, and in particular low molecular weight polyolefins (e.g., with a molecular weight up to about 5,000) such as ethylene/propylene copolymers, and in particular polyisobutene, preferably with a molecular weight from 300-500.

The fluid compound may also consist of compounds which are indicated as plasticizers. As example of plasticizers may be mentioned esters of carboxylic acids, e.g., of fatty acids, such as lauric acid and stearic acid, esters of di-carboxylic acids, such as adipic acid, azelaic acid, sebacic acid, phthalic acid (e.g., dinonylphthalate) and esters of polyhydric alcohols, such as erythritol. The esters may also comprise hetero-atoms and/or hetero groups in their hydrocarbon chains which may, e.g., contain hydroxyl groups and/or halogen atoms, such as chlorine or fluorine, or consist of perfluorinated carbon chains.

Other types of plasticizers which may be used are phosphorus-containing compounds, such as esters of phosphorus acids, in particular of phosphoric acid (e.g., tricresyl phosphate).

Plasticizers which consist of halogenated hydrocarbons, such as chlorinated or fluorinated hydrocarbons are also suitable.

Other types of suitable fluid compounds are low molecular weight, polyisocyanates, polyurethanes and polyepoxides, e.g., polyethylene oxide, polypropylene oxide and copolymers of ethylene oxide and propylene oxide and other oxiranes.

It will be understood that the fluid compounds to be used according to the invention are not limited to the type of compounds described above. Any fluid compound which is compatible to some extent with the silicone rubber may be used.

In case the fluid compound is compatible with the silicone rubber only in amounts which are not sufficient to ensure a long period of anti-fouling activity, the fluid compound is very suitably incorporated in the silicone rubber in an encapsulated form. The material used for the encapsulation is to be slowly permeable for the encapsulated fluid compound, so that a low concentration of this compound in the silicone rubber is maintained, enabling exudation of the fluid compound from the silicone rubber. The encapsulating material very suitably consists partly or totally of a polymer and may, e.g., be a silicone rubber or other type of rubbery material, or may be based on polyester, polyurethane or cellulose derivates or any other suitable polymeric material which allows a slow release of the encapsulated fluid into the silicone rubber.

The amount of the fluid compound present may vary between wide limits. Amounts from 0.1 to 100 pbw on 100 pbw of vulcanized silicone rubber are very suitable.

As a matter of course diluents for the fluid compounds may be present in the coatings according to the invention.

If desired, materials which enhance the strength of the silicone rubber may also be incorporated. As examples may be mentioned fibrous materials (e.g. glass fibres, glass flakes or nylon fibres) and powdered polymers, such as polytetrafluor-ethylene. Pigments may also be incorporated.

If desired fluorescent compounds may also be incorporated in order to mark parts of or sites on the fresh water structures.

The fluid compound is suitably applied onto the surface of the fresh water structure in admixture with the silicone gum to be vulcanized, and the latter is vulcanized in situ. For that reason the fluid compound to be used should be of such structure that it does not or only to an insignificant amount take part in the reactions which lead to cross-linking of the silicone gum to form a vulcanized silicone rubber.

The invention also relates to a method for the manufacture of a coated fresh water structure by coating at least part of the outer surface of a fresh water structure by application of a mixture which comprises a silicone gum and a fluid compound, and vulcanizing the silicone gum.

The outermost layer according to the invention may be applied onto the surface of the fresh water structure by any suitable means, such as brushing, spraying and the like.

The surface to be coated according to the invention may have been pretreated in order to increase the adhesion of the coating according to the invention thereto, e.g., by sandblasting and/or priming and/or application of an adhesive layer. Other coatings may also have been applied, e.g., an anti-corrosive coating and/or an anti-fouling coating of prior art.

It is also possible to apply a coating according to the invention onto the outer surface of the fresh water structure by application onto the said outer surface of a sheet, which may be flexible, the outermost layer of which comprises a vulcanized silicone rubber and a fluid compound. Flexible sheets very suitably consist of a fabric, which may for example be a woven fabric of e.g. glass-, nylon-, polypropylene- or polyester yarn, or a tough plastics film of e.g. oriented polyester or polypropylene film. The sheet is very conveniently secured to the fresh water structure by any convenient means, e.g. by clamps, clamping bands or frames.

Example

The dry concrete surface of a fresh water trout tank was primed with a commercial primer and subsequently coated with a freshly prepared mixture of 100 pbw of a commercial organopolysiloxane with silanol end groups which contained grafted polymeric segments based on styrene (about 20-25%w) and butylacrylate (about 30-40%w), 20 pbw of a silicon oil (dimethylpolysiloxane), 4 pbw of a catalyst consisting of a blend of a tin salt and ethylsilicate, a green pigment, and 20 pbw of low boiling hydrocarbons as a diluent. The coating according to the invention was formed in situ by vulcanization of the organo-polysiloxane; the low boiling hydrocarbons evaporated. The tank was filled with water and trout was breeded therein. After four months the surface of the tank was clean.

As a comparison it is recorded that in case epoxy paints of prior art had been used as a coating for the surface of the tank, after four months in use weeds and grasses had developed onto the surface of the trout tank.

CLAIMS

1.    A fresh water structure, characterized in that the surface thereof is at least partially coated with one or more layers, the outermost layer comprising a vulcanized silicone rubber and a fluid compound.

2.    A fresh water structure according to claim 1, characterized in that the vulcanized silicone rubber contains silicon-free segments which are constituted of recurrent units.

3.    A fresh water structure according to claim 2, characterized in that the outermost layer has been prepared by vulcanizing an organopolysiloxane which contains silicon-free segments which are constituted of recurrent units.

4.    A fresh water structure according to any one of claims 2-3, characterized in that the silicon-free segments are polymeric segments.

5.    A fresh water structure according to claim 4, characterized in that the polymeric segments are derived from esters of acrylic acid and/or methacrylic acid and monovalent alcohols, and/or styrene.

6.    A fresh water structure according to claim 5, characterized in that the polymeric segments are derived from both butylacrylate and styrene.

7.    A fresh water structure according to any one of the preceding claims, characterized in that the fluid compound is a non-toxic metal-free organic compound.

8.    A fresh water structure according to any one of the preceding claims, characterized in that the fluid compound is liquid at the temperature prevailing in the fresh water and has a boiling point at atmospheric pressure of at least 250°C.

9.    A fresh water structure according to claim 8, characterized in that the fluid compound is a silicone fluid.

10. A fresh water structure according to claim 8, characterized in that the fluid compound consists of one or more hydrocarbons.

11. A method for the manufacture of a coated fresh water structure according to any one of the preceding claims, characterized in that it comprises application of a mixture which comprises a silicone gum and a fluid compound onto the surface of a fresh water structure and vulcanizing the silicone gum.

**0089071**
Application number

European Patent
Office

**EUROPEAN SEARCH REPORT**

EP 83 20 0203

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | EP-A-0 032 597  (SHELL)<br>* Claims 1-25 *<br><br>--- | 1-11 | C 09 D    5/16 |
| Y | GB-A-1 550 357  (SECR. OF STATE FOR DEFENCE)<br>* Page 1, lines 5-19 *<br><br>----- | 1 | |

TECHNICAL FIELDS
SEARCHED (Int. Cl. ³)

C 09 D

The present search report has been drawn up for all claims

| Place of search<br>THE HAGUE | Date of completion of the search<br>26-05-1983 | Examiner<br>DE ROECK R.G. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L · document cited for other reasons

& : member of the same patent family, corresponding
    document

EPO Form 1503 03 82